# EUROPEAN PATENT APPLICATION

(11) **EP 2 204 493 A1**
(43) Date of publication of application: **07.07.2010**
(21) Application number: 08843168.9
(22) Date of filing: 22.10.2008
(51) Int. Cl.: D21H 21/14, C01B 31/02, D06M 11/74, D21H 13/50, D21H 15/12, D06M 101/06

(54) **SHEET-LIKE ARTICLE AND METHOD FOR PRODUCING THE SAME**

(30) Priority: 23.10.2007 JP 2007274693
(71) Applicant: Tokushu Paper Mfg. Co., Ltd., Sunto-gun Shizuoka 411-8750 (JP)
(72) Inventor: AKIYAMA, Kousuke, Sunto-gun Shizuoka 411-8750 (JP); IMAI, Masanori, Sunto-gun Shizuoka 411-8750 (JP)
(74) Representative: Forstmeyer, Dietmar
(86) International application number: PCT/JP2008/069150
(87) International publication number: WO 2009/054415

(57) **Abstract**

A sheet-like article including fibers and carbon nanotubes and/or carbon nanohoms adhering to the surface of the fibers in a uniformly dispersed state without agglomeration to form a network structure on the fibers. The sheet-like article is preferably made by converting the fibers and a dispersion of the carbon nanotubes and/or carbon nanohoms by a wet papermaking process. To use cellulose fibers as main fibers provides a good sheet-like article.

## Description

### Technical Field

This invention relaters to a sheet-like article that is fabricated of fibers having carbon nanotubes and/or carbon nanohoms adhering thereto and is useful as an electrically conductive material, an electromagnetic shielding material, an electromagnetic absorbing material, a microwave heating element, an electrode, an ultrafine filter, a sheet heating element, a catalyst carrier, and so on. The invention also relates to a method for producing the sheet-like article.

### Background Art

Carbon nanotubes (CNTs) and carbon nanohoms (CNHs) exhibit very low electrical conductivity based on their unique structure and are receiving attention for use as an electrically conductive material, an electromagnetic shielding material, an electromagnetic absorbing material, a microwave heating element, an electrode, an ultrafine filter, a sheet heating element, and so on. Sheet materials containing CNTs or CNHs have been studied for these uses.

For example, patent document 1 (see below) proposes a sheet composed of pulp and carbon fibers having a diameter of 0.01 to 4 µm and an aspect ratio of 2 to 100,000. The sheet is produced by a method including the step of mixing pulp and the carbon fiber. Therefore, the carbon fibers form agglomerates even though they are subjected to a treatment for improving dispersibility, such as oxidation, coating, or grafting and fails to form a carbon fiber network on the cellulose fibers. Because the connections between carbon fibers are reduced due to the formation of carbon fiber agglomerates, it has been difficult to achieve the best performance characteristics of the carbon fibers, such as electrical conductivity, electromagnetic shielding characteristics, and microwave absorbing characteristics.

Patent document 2 (see below) discloses paper containing carbon fibril agglomerates, in which carbon fibrils are intertwined with cellulose fibers. However, since the carbon fibrils exist in the form of agglomerates, they do not form a sufficient network in the sheet, which makes it difficult to obtain the full performance of carbon fibrils, as is the case with the sheet of patent document 1.

Patent document 3 (see below) proposes a method for covering natural fibers with CNTs by immersing natural fibers in a mixture of CNTs, a surfactant, and distilled water. This method, however, fails to achieve sufficient covering of the cellulose fibers with CNTs. Moreover, natural fibers containing a surfactant are not easily entangled with each other so that, while usable as yarn for woven fabric, they are difficult to be formed into a sheet by a wet papermaking technique. Because the CNTs are coated with the surfactant and are therefore inhibited from coming into contact with each other, electron motion is interfered with so that sufficient electrical conductivity is not provided.

Patent document 4 (see below) teaches a method for covering natural fibers with CNTs by treating natural fibers with a dispersion of CNTs in a chemical plating bath. According to the method, natural fibers are covered with CNTs via a metal, such as nickel. As a result, the performance characteristics essentially possessed by CNTs, such as electromagnetic shielding characteristics, microwave absorbing characteristics, and planarly heat generating properties, are not fully exhibited. Although natural fibers treated with a chemical plating bath are usable as yarn for woven fabric as stated above, it is impossible to form them into a sheet by a wet papermaking technique.

Patent documents 5 and 6 (see below) disclose a method for dispersing CNTs and a sheet made by the method. The sheet is made solely of CNTs and is therefore very expensive and unable to retain the strength as a sheet. In addition, the CNTs have a surfactant adhering thereto. The network formed of such CNTs does not sufficiently exhibit the performance, such as electrical conductivity, because the surfactant interferes with electrical conduction.

Patent document 7 (see below) proposes paper containing CNTs and a method for producing the paper. However, the CNT fixing technique disclosed therein allows CNTs to agglomerate in the step of preparing a pulp slurry, resulting in a failure to form a satisfactory network of CNTs in the sheet. Therefore, it is difficult to make the full advantage of the electrical conductivity of CNTs, and it is necessary to add a large quantity of CNTs to decrease the conductivity of the sheet.

Thus, it has been difficult with conventional technology to form a CNT- and/or CNH-containing sheet having very effective electrical characteristics suited for use as an electrically conductive material, an electromagnetic shield, a microwave heating element, an electrode, and so forth.

Patent document 1: JP 63-288298A
Patent document 2: JP 7-97789A
Patent document 3: JP 2005-256221 A
Patent document 4: JP 2005-256222A
Patent document 5: JP 2007-39623A
Patent document 6: JP 2007-63107A
Patent document 7: WO08/069287

### Disclosure of the Invention

An object of the invention is to provide a sheet-like article having excellent electrical characteristics and heat generating characteristics and suitable for use as an electrically conductive (hereinafter simply referred to as "conductive") material, an electromagnetic shielding material, an electromagnetic absorbing material, a microwave heating element, an electrode, and so on.

The invention provides a sheet-like article including fibers and a large number of CNTs and/or CNHs adhering to the fibers. The CNTs and/or CNHs adhere to the surface of the fibers in an uniformly dispersed state without agglomeration thereby to form a network structure on the fibers.

The invention provides an embodiment of the sheet-like article, which is obtained by a wet papermaking process using a dispersion of the CNTs and/or CNHs and the fibers.

The invention provides an embodiment of the sheet-like article, which is obtained by impregnating a fiber aggregate free from the CNTs and/or CNHs with a dispersion of the CNTs and/or CNHs.

The invention provides an embodiment of the sheet-like article, in which the fiber aggregate is formed of fibers treated with a cationic organic polymer.

The invention provides an embodiment of the sheet-like article, in which main fibers forming the sheet-like article are cellulose fibers.

The invention also provides a method of making the sheet-like article. The method includes the steps of mixing fibers and a dispersion of CNTs and/or CNHs to prepare a mixed dispersion and converting the mixed dispersion into a sheet by a wet papermaking process.

The invention provides an embodiment of the method, in which the dispersion of CNTs and/or CNHs contains a surfactant.

The invention provides an embodiment of the method, which further includes the step of adsorbing a CNT and/or CNH fixing agent to the fibers before the step of mixing the fibers with the dispersion of CNTs and/or CNHs.

The invention provides an embodiment of the method, in which the fixing agent has a polarity opposite to that of the surfactant.

The invention provides an embodiment of the method, in which the surfactant is anionic, and the fixing agent is cationic.

The invention provides an embodiment of the method, in which the fixing agent is an organic polymer.

### Brief Description of the Drawings

Fig. 1 is a schematic cross-section of a fiber forming the sheet-like article of the invention, taken along the longitudinal direction of the fiber.
Fig. 2 is an electron micrograph (x3000) of the sheet-like article obtained in Example 1.
Fig. 3 is an electron micrograph (x10000) of the sheet-like article obtained in Example 1.
Fig. 4 is an electron micrograph (x3000) of the sheet-like article obtained in Comparative Example 3.
Fig. 5 is an electron micrograph (x10000) of the sheet-like article obtained in Comparative Example 3.
Fig. 6 is a figure equivalent to Fig. 1 of a sheet-like article out of the scope of the invention.

### Best Mode for Carrying out the Invention

One of the essential characteristics of the sheet-like article of the invention is that CNTs and/or CNHs not only adhere to the surface of main fibers forming the sheet-like article but also form a specific network structure covering the surface of the fibers. As used herein, the expression "main fibers (forming the sheet-like article)" is intended to mean the fibers that form at least 51% by mass of the sheet-like article. The electrical conductivity (hereinafter simply referred to as "conductivity") of a CNT or CNH is almost the same as that of copper. A CNT and a CNH are physically very tough. Therefore, a sheet-like article fabricated of fibers covered with a specific network of CNTs and/or CNHs not only exhibits excellent electrical characteristics but have strength and yet flexibility providing ease in handling, being backed by the main fibers. The invention has thus succeeded in settling the problems with conventional carbon black-containing sheeting, such as fall-off of paper dust or carbon black particles. The CNTs and/or CNHs existing on the fibers in the form of a network structure allow efficient conversion of electron kinetic energy, electromagnetic waves, and microwaves to thermal energy, thereby to provide an excellent electromagnetic shielding sheet, microwave heating element, and sheet heating element.

It is preferred that the specific network structure of CNTs and/or CNHs preferentially cover the main fibers of the sheet-like article. It is preferred that at least 5%, more preferably 20% or more, of the surface area of the main fibers be covered with CNTs and/or CNHs. When the surface area of the main fibers covered with CNTs and/or CNHs is less than 5% based on the total surface area of the main fibers, it is difficult for CNTs and/or CNHs to form a network structure on the fibers and to provide good electrical characteristics. That is, it is preferred for obtaining good electrical characteristics that at least 5%, more preferably 20% or more, of the surface area of the main fibers be covered with CNTs and/or CNHs.

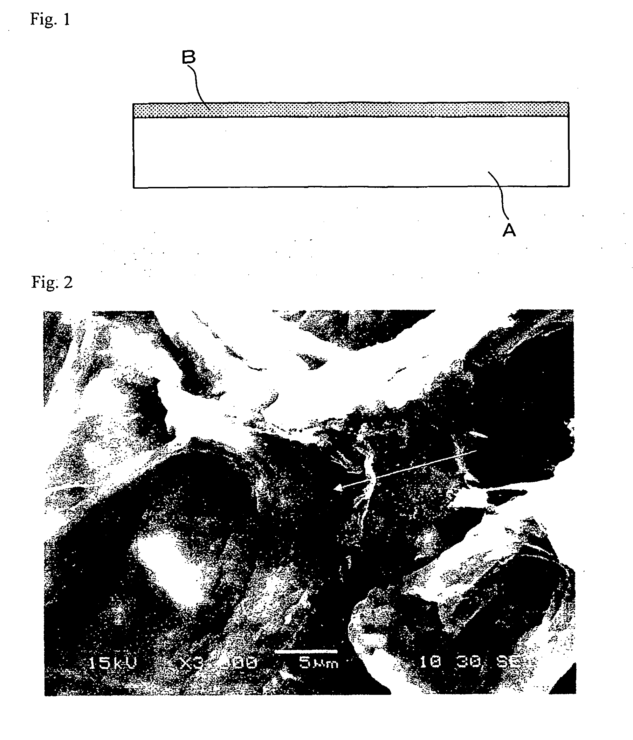

The specific network structure of CNTs and/or CNHs on the fibers is the structure of a large number of CNTs and/or CNHs adhering to the surface of a fiber A (the main fiber) in a uniformly dispersed state without agglomeration, as schematically illustrated in Fig. 1. A large number of CNTs and/or CNHs form a continuous carbon layer (microscopic network structure) B with a uniform thickness over substantially the whole length of the fiber A. A great number of fibers A each having such a microscopic network structure (i.e., carbon layer B) of CNTs and/or CNHs formed thereon are three dimensionally entangled with each other to form a sheet. Accordingly, the sheet-like article of the invention has, as a whole, a macroscopic network of CNTs and/or CNHs to exhibit excellent electrical characteristics and heat generating characteristics.

As used herein, the term "network structure of CNTs and/or CNHs" refers not only to the microscopic network structure continuously formed by mutual connection of CNTs and/or CNHs on the individual main fibers but also to the macroscopic network structure formed by three dimensional entanglement of the fibers covered with CNTs and/or CNHs. The CNTs and/or CNHs are thus in continuous contact with each other throughout the sheet-like article to provide passageways for electrons, which is considered to provide the above discussed very advantageous electrical characteristics. However, it is not always necessary for CNTs and/or CNHs to form a carbon layer B with a uniform thickness on a fiber A as illustrated in Fig. 1. The carbon layer B may have a somewhat varying thickness or may have a surface roughness.

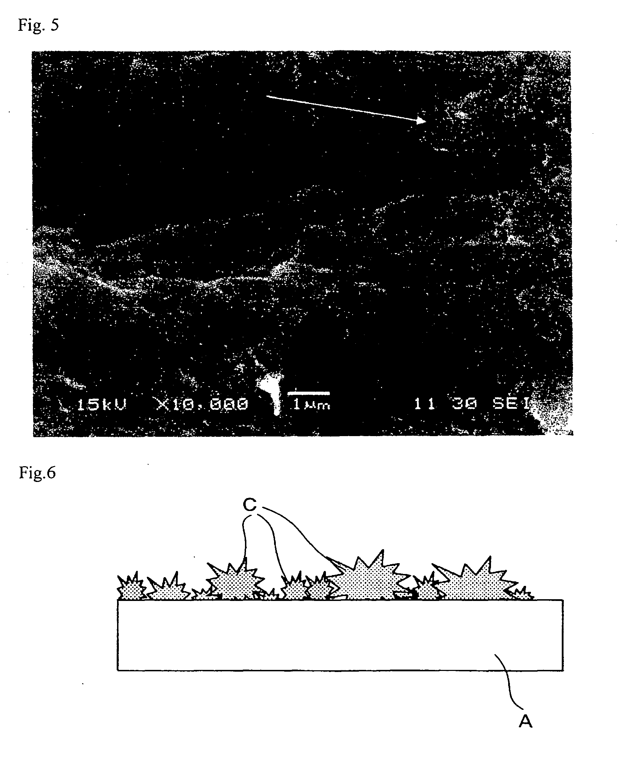

As stated, it is necessary for CNTs and/or CNHs to adhere to the surface of individual main fibers forming the sheet-like article of the invention in a uniformly dispersed state without agglomeration, as schematically illustrated in Fig. 1, thereby to achieve uniform conductivity through the sheet-like article. In the case of, in contrast, a sheet-like article containing fibers having CNTs and/or CNHs adhering thereto in which a large number of CNTs and/or CNHs form a number of agglomerates C which continuously connect to each other on the surface of a main fiber A, i.e., the CNTs and/or CNHs are not uniformly dispersed as schematically illustrated in Fig. 6, although electrons are allowed to pass through the agglomerates C, the sheet-like article hardly provides reliable electrical conduction as a whole. In this case, since no improvement in conductivity is expected, CNTs and/or CNHs should be used in an increased amount to obtain improved conductivity, which will cause an increase in cost. Consequently, the sheet-like article is not preferred. Moreover, the CNTs and/or CNHs added in a largely increased amount will not only cover the fiber surface but fill the fiber-fiber interstices. As a result, drainage of a wet-laid fiber layer deteriorates, making sheet formation difficult. Since the CNTs and/or CNHs are not uniformly distributed in the sheet-like article, as schematically shown in Fig. 6, conductivity inside the sheet-like article is not uniform, which may lead to such a problem that electrification can cause a fire at a portion having high resistance.

Where CNTs or CNHs are discontinuous on the fiber surface, i.e., where a large number of CNTs and/or CNHs do not form a network structure on the fiber, the CNTs and/or CNHs fail to efficiently convert electromagnetic or microwave energy to thermal energy and to exhibit sufficient effects when, in particular, the sheet-like article is used as an electromagnetic shield or a microwave heating element.

The sheet-like article of the invention exhibits conductivity in its thickness direction, too, because of the network structure of CNTs and/or CNHs extending in not only planar directions (two dimensional directions) but also in the thickness direction (three dimensional directions) of the sheet-like article. Therefore, the sheet-like article is suited for use as, for example, a current collector of a battery cell. The network structure of CNTs and/or CNHs extending in the thickness direction also brings about great improvements in electromagnetic shielding characteristics and the like. In the cases where the main fibers are partly covered with CNTs and/or CNHs, the ratio of the surface area of the fibers covered with CNTs and/or CNHs to the total surface area of the main fibers is of importance. In such cases, a single fiber may have CNTs and/or CNHs adhering to a divided part(s) of its surface. The electromagnetic wave shielding characteristics or the characteristics as a microwave heating element are secured as long as the ratio of the surface area of the main fibers covered with CNTs and/or CNHs to the total surface area of the main fibers (hereinafter referred to as "covered surface area ratio") is 5% or more. With a covered surface area ratio of 20% or more, the performance as a sheet heating element is markedly improved. With a covered surface area ratio of 50% or more, conductivity is remarkably improved, which will allow application to new fields where conductivity is of concern. The covered surface area ratio, a measure of the degree to which the surface of the main fibers is covered with CNTs and/or CNHs, is a significant parameter; for it relates to the degree of the formation of the network by CNTs and/or CNHs. The degree of the formation of the network by CNTs and/or CNHs is easily demonstrable by direct observation under an electron microscope

The sheet-like article having the above discussed network structure of CNTs and/or CNHs is preferably fabricated by (1) a wet papermaking process using fibers and a dispersion of the CNTs and/or CNHs (hereinafter also referred to simply as "CNT/CNH dispersion") or (2) impregnating a fiber aggregate formed without using CNTs and/or CNHs with a CNT/CNH dispersion. In either method, to use a CNT/CNH dispersion is a key point for forming the network structure of CNTs and/or CNHs to make the sheet-like article.

The method (1) is sheet formation by a wet papermaking process. A wet papermaking process is a technique commonly used to make paper or nonwoven fabric, which includes dispersing fibers in water, adding necessary chemicals to the resulting slurry as appropriate, and converting the slurry into a sheet form using wire cloth. CNTs and CNHs are usually composed solely of surface atoms so that they are attracted to themselves by van der Waals force and eventually exist as agglomerates. If CNTs and CNHs are used to make a sheet in the form of powder without being dispersed in a liquid medium, such as water, they would exists in the resulting sheet in the form of agglomerates as schematically illustrated in Fig. 6 and fail to exhibit their intrinsic performance discussed above. It is therefore desirable in the invention that the sheet-like article be fabricated using a CNT/CNH dispersion. The dispersion preferably contains a surfactant helping CNTs and/or CNHs to be dispersed in a liquid medium.

The manner of dispersing CNTs and/or CNHs, i.e., the method of preparing a CNH/CNHs dispersion is not particularly limited. Examples of useful dispersions include, but are not limited to, a dispersion prepared by dispersing CNTs and/or CNHs using a surfactant by ultrasonication, bead-milling, or like means; a dispersion prepared by dispersing using an organic solvent by a physical treatment, such as ultrasonication or bead-milling; a dispersion prepared by making use of a repulsive force between molecules of the same polarity; a dispersion obtained by dispersing CNTs and/or CNHs having a magnetic substance adhering thereto; a dispersion prepared by dispersing CNTs and/or CNHs with their surface modified; and a dispersion prepared by a combination of these techniques. A CNT/CNH dispersion in water is particularly advantageous to form a network structure of CNTs and/or CNHs on the surface of fibers having a hydrophilic group, such as cellulose fibers.

Production of the sheet-like article of the invention by a papermaking process (the method (1)) will be described taking, for instance, the case of using cellulose fibers as the main fibers constituting the sheet-like article. The method includes the steps of mixing fibers and a CNT/CNH dispersion to prepare a mixed dispersion and converting the mixed dispersion into a sheet form. In order to form the above described specific network structure, it is significant to select a combination of the manner of dispersing CNTs and/or CNHs and a fixing agent. The fixing agent preferably has a polarity opposite to that of the surfactant. Cellulose fibers are known to be negatively charged when suspended in water. For example, when CNTs and/or CNHs are dispersed using an anionic surfactant, a cationic fixing agent is used to fix the CNTs and/or CNHs, whereby the CNTs and/or CNHs show good adhesion to the cellulose fibers while forming their network structure probably through the following mechanism. On being added to the cellulose fibers, the cationic fixing agent adheres to the surface of the cellulose fibers to change the surface charges of the cellulose fibers to positive. Thus, the CNTs and/or CNHs dispersed with the anionic surfactant are successfully adsorbed to the surface of the cellulose fibers by an electrical affinity.

CNTs and CNHs are known to have a very strong tendency to agglomerate due to van der Waals attraction. In order for CNTs and/or CNHs to be selectively fixed onto the cellulose fibers to form a good network structure, it is necessary to prevent them from agglomerating before they are fixed on the cellulose fibers. Among the manipulations that may be used to achieve this is addition of a cationic fixing agent to an aqueous dispersion of cellulose fibers (i.e., a pulp slurry) to fix the cationic fixing agent onto the cellulose fibers followed by addition of a dispersion of CNTs having the surface charged anionically that is prepared by, for example, using an anionic surfactant as a dispersant. It is preferred that addition of the cationic fixing agent into the pulp slurry be followed by stirring thoroughly. That is to say, it is preferred that the fixing agent for CNTs and/or CNHs be adsorbed onto the fibers before the fibers are mixed with the CNT/CNH dispersion. Thus, the cationic fixing agent is uniformly adsorbed on the surface of the cellulose fibers, followed by adsorbing the anionically charged CNTs to the adsorbed cationic fixing agent. As a result, the CNTs and/or CNHs successfully form a network structure on the surface of the cellulose fibers while being prevented from agglomerating. In the case when the cationic fixing agent is added after the addition of the dispersion into the pulp slurry, not only adsorption on the cellulose fibers but also considerable agglomeration of the CNTs and/or CNHs occur.

For use as a fixing agent (cationic fixing agent) organic polymers are preferable to inorganic fixing agents generally used in papermaking, such as aluminum sulfate, probably for the following reason. It is known that an organic polymeric fixing agent is adsorbed on a fiber surface in a train-loop-tail configuration. "Train" segments are directly adsorbed on the surface of a fiber and "loop" or "tail" segments spread out into the solvent. When a dispersion of anionically charged CNTs and/or CNHs is added to the fiber slurry in which the polymeric fixing agent is adsorbed on the fiber in such a configuration, the loop and tail segments of the cationic organic polymeric fixing agent are adsorbed on the negatively charged surface of CNTs to form bridges. This is believed to accelerate adsorption of the CNTs and/or CNHs to the cellulose fiber surface. Accordingly, in order to obtain the fixing effect to the maximum extent, it is preferred that adsorption of the fixing agent on the cellulose fibers, which may be achieved by adding the fixing agent to an aqueous dispersion of the cellulose fibers, be followed by adsorption of CNTs and/or CNHs on the cellulose fibers, which may be achieved by adding a dispersion of the CNTs and/or CNHs to the aqueous dispersion of the cellulose fibers.

An inorganic fixing agent, like aluminum sulfate, which is generally used in the field of papermaking, is considered to be fixed by a mechanism such that it is adsorbed on the surface of a particle to neutralize the charges and fixed by van der Waals force. In this case, although fixation of the CNTs and/or CNHs to the cellulose fibers and formation of a network structure by the CNTs and/or CNHs are observed, the CNTs and/or CNHs undergo agglomeration due to the very strong van der Waals force between themselves. As a result, the resulting sheet-like article is inferior in performance to the sheet-like article obtained using an organic polymeric fixing agent.

Formation of a satisfactory network by CNTs and/or CNHs on the surface of cellulose fibers is also achieved when the CNTs and/or CNHs are dispersed with a cationic surfactant. In this case, the pulp slurry may previously be made anion-rich by adding to the pulp slurry an anionic polymer, microfibrillated cellulose, or carboxymethyl cellulose, to thereby accelerate fixation of the CNTs and/or CNHs on the cellulose fibers.

The method of making the sheet-like article by the papermaking process is advantageous in that the surfactant used to disperse the CNTs and/or CNHs is removed simultaneously with the sheet formation. When a process other than the wet papermaking process, such as a dry process, is followed, the residual surfactant tends to act on the fiber surface to interfere with the formation of hydrogen bonds between cellulose fibers. Furthermore, the surfactant present on the surface of the CNTs and/or CNHs tends to inhibit the CNTs and/or CNHs from coming into direct contact with each other during the formation of the network structure. By using a wet papermaking process, the CNTs and/or CNHs are allowed to form a network structure in the wet-laid fiber sheet, which is then dewatered to be freed of the surfactant present on the surface of the CNTs and/or CNHs. The above discussed problems are thus settled.

The sheet-like article of the invention is also obtained by the method (2) described above. The method (2) is known as an impregnation methods. More specifically, the method (2) includes the steps of making a CNT- or CNH-free sheet or fiber aggregate of the main fibers and soaking the fiber aggregate in a CNT/CNH dispersion to infiltrate the dispersion deep into the inside of the fiber aggregate, whereby the CNTs and/or CNHs cover the surface of the individual fibers to form a microscopic network while forming a three dimensional, macroscopic network throughout the sheet. The manner of covering the individual main fibers with the CNT and/or CNH network structure is not particularly restricted. For example, the sheet or fiber aggregate may be formed of the main fibers having been treated with a cationic organic polymer so as to facilitate fixing the CNTs and/or CNHs, and the resulting fiber aggregate is impregnated with a CNT/CNH dispersion. It is also effective to use cationic pulp to make main fibers with a cationic surface and convert the main fibers into a sheet, which is then impregnated with a dispersion of CNTs and/or CNHs having been treated to become anionic to form a network structure of the CNTs and/or CNHs on the main fibers. Preferred examples of the CNT/CNH dispersion include a dispersion prepared by dispersing using an organic solvent by a physical treatment, such as ultrasonication or bead-milling and a dispersion prepared by dispersing CNTs and/or CNHs with their surface modified.

When in using a CNT/CNH dispersion containing a surfactant, the resulting sheet-like article may be subjected to post treatment to eliminate the aforementioned interference of the surfactant and to obtain the effects of CNTs and/or CNHs to a sufficient extent. For example, the sheet-like article may be washed by immersing in a solvent which elutes the surfactant to have improved conductivity.

The CNTs and CNHs for use in the invention are not particularly limited. There are various methods for making CNTs, such as CVD, arc discharge, and laser ablation. The effects of the invention do not depend on the method of making CNTs. There are two types of CNTs: single-walled CNTs that can be conceptualized by wrapping a single graphene sheet into a cylinder and multi-walled CNTs composed of two or more concentric single-walled CNTs, either of which is useful. The diameter of the CNT is preferably 1 to 75 nm, more preferably 1 to 50 nm. The length of the CNT is preferably 0.1 µm or longer, more preferably 1 µm or longer. The diameter of the CNH is preferably 150 nm or less.

The main fibers (main fibers forming the sheet-like article) that can be used in the invention are not particularly limited. Examples of fibers useful as the main fibers include cellulose fibers, such as wood pulp fibers, e.g., softwood bleached kraft pulp (NBKP), hardwood bleached kraft pulp (LBKP), softwood bleached sulfite pulp (NBSP), and thermomechanical pulp (TMP), bast fibers, e.g., paper mulberry, oriental paperbush, and gampi (*Diplomorpha sikokiana*)*,* non-wood pulp fibers, e.g., straw, bamboo, kenaf, and bagasse, microfibrillated cellulose fibers obtained by treating cellulose fibers, biocellulose fibers, rayon fibers, other surface-treated cellulose fibers, and carboxymethyl cellulose fibers; synthetic pulp; synthetic fibers; semisynthetic fibers; inorganic fibers; and metal fibers. These fibers may be used either individually or as an appropriate combination thereof. If desired, carbon fibers, activated carbon fibers, conductive fibers, and metal fibers may be used as well.

To use cellulose fibers as the main fibers is preferred because CNTs and/or CNHs are fixed to the fibers while efficiently forming the network structure for some unknown reason. It is believed that CNTs and/or CNHs are fixed onto the surface of the fibers while forming a network structure through the above discussed mechanism because cellulose fibers are negatively charged due to their hydroxyl groups. Additionally, cellulose fibers have good dispersibility in water owing to the hydrophilic hydroxyl groups, which is advantageous when the sheet is formed by a wet papermaking process.

To use microfibrillated cellulose obtained by disintegrating cellulose fibers under high pressure and shearing force is preferred as providing a denser three dimensional network structure. Microfibrillated cellulose is fine fibers obtained by treating cellulose fibers so as to have a number average length of 0.05 to 3 mm and a water retention of 200 ml or more. Using such fine fibers to be covered with CNTs and/or CNHs provides a denser and more uniform network structure. Microfibrillated cellulose is very well fixable on cellulose fibers, such as pulp fibers. Therefore, using microfibrillated cellulose or a mixture of cellulose fibers and microfibrillated cellulose to be covered with CNTs and/or CNHs is extremely effective in forming a network structure of CNTs and/or CNHs.

In making the sheet-like article by a wet papermaking process, commonly employed papermaking additives may be used within ranges that do not impair the performance. Examples of such additives include water soluble polymeric strength agents, such as starch, guar gum, and polyvinyl alcohol; polymeric strength agents, such as polyacrylamide and vinylamine polymers; wet strength agents, such as melamine and polyamide polyamine epichlorohydrin; loading materials, such as titanium oxide, calcium carbonate, kaolin, and talc; sizes, such as a rosin size, an alkylketene dimer, a sodium alkenyl succinic anhydride, and styrene-acrylic monomer copolymers; and fixing agents, such as aluminum sulfate, cationized polyacrylamide, and anionized polyacrylamide. If desired, carbon black may be added.

The sheet-like article of the invention, especially the sheet-like article containing CNTs is useful as an ultrafine filter. This is considered to owe to the ultrafine voids formed by CNTs in which fine particles are trapped.

The sheet-like article of the invention, particularly the sheet-like article containing CNHs is usable as a catalyst carrier with the CNH's property of taking in a substance being taken advantage of.

### Examples

CNTs were dispersed in accordance with the following dispersing methods.

### Dispersing method 1:

CNTs were kneaded with sodium dodecylbenzenesulfonate as a dispersant in a mortar for 20 minutes. The mixture was treated in an ultrasonic bath operating at a frequency of 38 kHz and a power of 120 W for 2 hours to provide a CNT dispersion of anionic surfactant type.

### Dispersing method 2:

A CNT dispersion of cationic surfactant type was prepared in the same manner as dispersing method 1, except for using dododecyldimethylammonium bromide as a dispersant.

### Dispersing method 3:

CNTs were kneaded in a mortar for 20 minutes and then dispersed in acetone to give a CNT solid content of 2 mass%. The dispersion was processed with ultrasonic waves at 100 W for 20 minutes to give a CNT dispersion of physical treatment type.

### Example 1

Fifty percent by mass of hardwood bleached kraft pulp and 50 mass% of softwood bleached kraft pulp were dispersed in water and beaten in a double disc refiner to prepare a pulp slurry having a CSF freeness of 350 ml. Cationic starch (Neotack L-1, from Nihon Syokuhin Kako Co., Ltd.) was mixed therein in an amount of 2 mass% relative to the pulp mass. The CNT dispersion of anionic surfactant type prepared by the dispersing method 1 was then mixed therein to give a slurry having a CNT solid content of 5 mass% relative to the pulp mass. The slurry was converted into a sheet-like article having a grammage of 100 g/m² by a wet papermaking process using a wire cloth.

### Example 2

A sheet-like article having a grammage of 100 g/m² was made in the same manner as in Example 1, except for replacing the CNT dispersion of anionic surfactant type obtained by the dispersing method 1 with the CNT dispersion of cationic surfactant type obtained by the dispersing method 2 and using 3 mass% of carboxymethyl cellulose in place of the cationic starch.

### Example 3

A sheet-like article having a grammage of 100 g/m² was made in the same manner as in Example 1, except for replacing the CNT dispersion of anionic surfactant type obtained by the dispersing method 1 with the CNT dispersion of physical treatment type obtained by the dispersing method 3.

### Example 4

A sheet-like article having a grammage of 100 g/m² was made in the same manner as in Example 1, except for using 2 mass%, relative to the pulp mass, of aluminum sulfate as a fixing agent.

### Example 5

Fifty percent by mass of hardwood bleached kraft pulp and 50 mass% of softwood bleached kraft pulp were dispersed in water and beaten in a double disc refiner to prepare a pulp slurry having a CSF freeness of 350 ml. A polyamide epichlorohydrin resin (WS4002, from Seiko PMC Corp.) was mixed therein as a wet strength agent in an amount of 0.5 mass% relative to the pulp mass. The resulting pulp slurry was converted into a sheet having a grammage of 100 g/m² by a wet papermaking process. The sheet was impregnated with the CNT dispersion obtained by the dispersing method 3 and dried to give a CNT-impregnated sheet-like article. The CNT content of the sheet-like article was 1.5% as calculated from the amount of the dispersion infiltrated into the sheet.

A CNT-impregnated sheet-like article was made in the same manner as in Example 5, except that the unimpregnated sheet was impregnated with a 1% solution of cationic starch as a fixing agent and dried. The resulting impregnated sheet was further impregnated with the CNT dispersion of anionic surfactant type obtained by the dispersing method 3 to give a CNT-impregnated sheet-like article.

### Comparative Example 1

Fifty percent by mass of hardwood bleached kraft pulp and 50 mass% of softwood bleached kraft pulp were dispersed in water and beaten in a double disc refiner to prepare a pulp slurry having a CSF freeness of 350 ml. Two percent by mass of a polyamide epichlorohydrin resin (WS4002, from Seiko PMC Corp.) was mixed therein. The resulting pulp slurry was converted into a sheet having a grammage of 100 g/m² by a wet papermaking process using a wire cloth.

### Comparative Example 2

A sheet-like article was fabricated using cellulose fibers and, as a binder, polyethylene fibers by a dry process. The article was apparently found to have CNTs agglomerated.

### Comparative Example 3

Fifty percent by mass of hardwood bleached kraft pulp and 50 mass% of softwood bleached kraft pulp were dispersed in water and beaten in a double disc refiner to prepare a pulp slurry having a CSF freeness of 350 ml. A CNT powder, which was not dispersed in a liquid medium, was then mixed therein in an amount of 5 mass% on a solid basis relative to the pulp mass, and 2 mass% of aluminum sulfate was also added thereto. The resulting slurry was converted into a sheet-like article having a grammage of 100 g/m² by a wet papermaking process using a wire cloth.

Each of the sheet-like articles obtained in Examples 1 to 6 and Comparative Examples 1 to 3 was evaluated for performance in terms of CNT-covered surface area ratio, electromagnetic shielding properties, microwave heating properties, planarly heat generating properties, and conductivity in accordance with the methods described below. The results of evaluation are shown in Table 1. The sheet-like article of Comparative Example 2 was not evaluated because of its incontestable inferiority due to the apparent agglomeration of CNTs.

### CNT-covered surface area ratio

The surface of a sample (sheet-like article) was photographed using an electron microscope (JSM-6360LA from JOEL, Ltd.) at a magnification of 3000 times. The ratio of the area covered with CNTs as calculated on the image was ranked AA to C as follows. Ranks AA, A and B are appraised as passable. The evaluation was made on randomly chosen 10 points per sample.
AA: 20% or more
A: 10% or more and less than 20%
B: 5% or more and less than 10%
C: less than 5%

### Electromagnetic shielding properties

Electromagnetic shielding properties of 100 MHz and of 3 GHz were determined by placing a sample (sheet-like article) between a micro loop antenna for radiating electromagnetic signals (loop diameter: 5 mm; available from Keycom Corp.) and a micro loop antenna for receiving electromagnetic signals (magnetic field probe CP-25, from NEC Glass Corp.), each connected to a spectrum analyzer (R3132, from Advantest Corp.). The electromagnetic shielding properties at 100 MHz and 3 GHz were expressed in decibel (dB) and ranked AA to C as follows. Samples ranked AA and A are passable.
At 100 MHz:
AA: 15 dB or more
A: 10 dB or more and less than 15 dB
B: 5 dB or more and less than 10 dB
C: less than 5 dB
At 3 GHz:
AA: 20 dB or more
A: 10 dB or more and less than 20 dB
B: 5 dB or more and less than 10 dB
C: less than 5 dB

### Microwave heating properties

A sample (sheet-like article) was microwaved in a domestic microwave oven at 600 kW for 30 seconds, and the surface temperature of the sample was measured with a non-contact thermometer. A sample that heated to a temperature 10°C or more higher than before being microwaved was ranked B. A sample that heated to a temperature 20°C or more higher than before being microwaved was ranked A. A sample that did not heat to a temperature 10°C or more higher than before being microwaved was ranked C. Ranks A and B are passable.

### Planarly heat generating properties

A sample (sheet-like article) was placed on a glass plate. A voltage of 12 V was applied to the sample for 5 minutes using electrodes spaced 10 cm. After the voltage application, the surface temperature of the sample was measured with a non-contact thermometer in a constant temperature room set at 23°C. A sample the surface temperature of which rose by 10°C or more was ranked B. A sample the surface temperature of which rose by 20°C or more was ranked A. A sample the surface temperature of which did not rise by 10°C or more was ranked C. Ranks A and B are passable.

### Conductivity

A sample (sheet-like article) was conditioned under the conditions described in JIS P8111 for one day. The volume resistivity of the conditioned sample was measured by the four-terminal method in accordance with JIS K7194 as a measure of conductivity. The measurement was taken using Lorest MCP-HT450 from Mitsubishi Chemical Analytech Co., Ltd. at 23°C and 50% RH. The measured volume resistivity was ranked as follows. Ranks AA to B are passable.
AA: less than 1x10¹ Ω·cm
A: 1x10¹Ω·cm or more and less than 1x10² Ω·cm
B: 1x10² Ω·cm or more and less than 1x10³ Ω·cm
C: 1x10³ Ω·cm or more

**Table 1**

| | Sheet Formation Method | Covered Surface Area Ratio | Electromagnetic Shielding Properties | | Microwave Heating Properties | Planarly Heat Generating Properties | Conductivity |
|---|---|---|---|---|---|---|---|
| | | | 100 MHz | 3 GHz | | | |
| Example 1 | wet papermaking | AA | AA | AA | A | A | AA |
| Example 2 | wet papermaking | AA | A | AA | A | A | A |
| Example 3 | wet papermaking | A | A | A | B | B | B |
| Example 4 | wet papermaking | B | A | A | A | A | A |
| Example 5 | impregnation | B | A | A | B | B | B |
| Example 6 | impregnation | A | A | A | A | A | A |
| Compara. Example 1 | wet papermaking | C | C | C | C | C | C |
| Compara. Example 2 | dry process | N.D. | N.D. | N.D. | N.D. | N.D. | N.D. |
| Compara. Example 3 | wet papermaking | C | C | B | C | C | C |

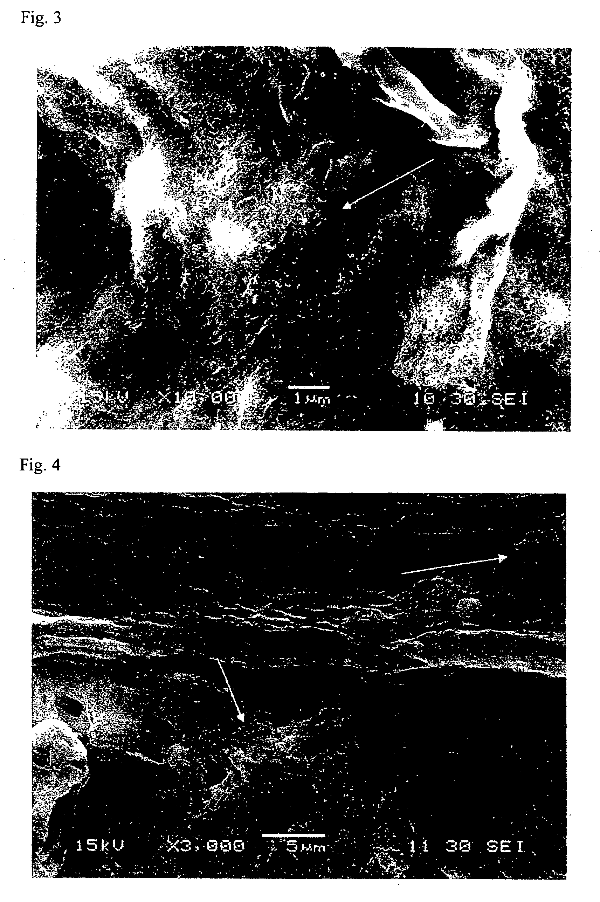

Figs. 2 and 3 are electron micrographs taken of the surface of the sheet-like article obtained in Example 1. In Fig. 3, the portion indicated by the arrow is a portion covered with CNTs corresponding to the carbon layer B of Fig. 1. The micrographs of Figs. 2 and 3 reveal that CNTs adhere to the cellulose fibers, the main fibers fabricating the sheet-like article, in a uniformly dispersed state without agglomeration thereby covering the cellulose fibers while forming a network structure. In particular, Fig. 2 provides visual observation of the network structure covering the cellulose fibers at a surface area ratio of 50% or more.

The sheet-like article of Example 1, which was prepared using a combination of an anionic surfactant for CNT dispersion and a cationic fixing agent, had better performance than the product of Example 2, which was prepared using a combination of a cationic surfactant for CNT dispersion and an anionic fixing agent and that of Example 3 prepared using a CNT dispersion of physical treatment type. This is considered to be because the above described fixation mechanism of the cationic polymer promotes covering of cellulose fibers with CNTs.

Electron microscopic observation of the surface of the sheet-like article of Example 4, which was prepared using an inorganic fixing agent, revealed that the CNTs adhere to the cellulose fibers in a uniformly dispersed state without agglomeration to cover the surface of the cellulose fibers while forming a network structure and that agglomerates of CNTs fill the interstices of the cellulose fibers. The wet papermaking system of Example 4 took a slightly longer time for dewatering as compared with the systems of Examples 1 through 3. This is probably because the CNT agglomerates filling the interstices of the cellulose fibers interfere with drainage.

The sheet-like articles of Examples 5 and 6 are both made by the impregnation method. The sheet-like article of Example 6 generally exhibits better performance than that of Example 5. This is considered to be because of good fixation of CNTs to the cellulose fibers, being accelerated by treating the cellulose fibers with the cationic polymer.

Containing no CNTs, the sheet-like article of Comparative Example 1 showed poor results in various performance characteristics. While the sheet-like article of Comparative Example 2 was not evaluated for performance, agglomeration of CNTs was noticeable. In addition, many of the CNTs fell off the surfaces of the fibers, apparently suggesting inferiority in performance.

Figs. 4 and 5 are electron micrographs taken of the surface of the sheet-like article obtained in Comparative Example 3. In Figs. 4 and 5, the portions indicated by the arrows are agglomerates of CNTs corresponding to the agglomerates C of Fig. 6. Figs. 4 and 5 reveal that the CNTs exist in the form of agglomerates, failing to sufficiently cover the surface of the cellulose fibers. The noticeable agglomeration of CNTs observed in Comparative Example 3 is believed to be because the CNTs were added to the dispersion of fibers in powder form (not in a dispersed state as in Examples).

### Industrial Applicability

The sheet-like article of the invention is fabricated of fibers having a large number of CNTs and/or CNHs adhering to the constituent fibers thereof in a uniformly dispersed state without agglomeration to build up a network structure on the fibers. Owing to this structure, the sheet-like article exhibits excellent conductivity, electromagnetic shielding properties, microwave heating properties, and planarly heat generating properties and are suited for use as a conductive sheet, an electromagnetic shielding sheet, a microwave heating sheet for cooking, an anti-fog sheet for mirror, an electrode, an ultrafine filter, and so forth.

## Claims

1. A sheet-like article comprising fibers and carbon nanotubes and/or carbon nanohorns,
the carbon nanotubes and/or carbon nanohorns adhering to the surface of the fibers in a uniformly dispersed state without agglomeration to form a network structure on the fibers.

2. The sheet-like article according to claim 1, being obtained by a wet papermaking process using the fibers and a dispersion of the carbon nanotubes and/or carbon nanohorns.

3. The sheet-like article according to claim 1, being obtained by impregnating a fiber aggregate free from carbon nanotubes and/or carbon nanohoms with a dispersion of the carbon nanotubes and/or carbon nanohoms.

4. The sheet-like article according to claim 3, wherein the fiber aggregate is formed of fibers treated with a cationic organic polymer.

5. The sheet-like article according to any one of claims 1 to 4, wherein the fibers mainly comprise cellulose fibers.

6. A method of making the sheet-like article according to claim 1, comprising the steps of mixing fibers and a dispersion of carbon nanotubes and/or carbon nanohoms to prepare a mixed dispersion and converting the mixed dispersion into a sheet form by a wet papermaking process.

7. The method according to claim 6, wherein the dispersion of carbon nanotubes and/or carbon nanohoms contains a surfactant.

8. The method according to claim 7, further comprising the step of adsorbing a fixing agent for carbon nanotubes and/or carbon nanohoms to the fibers before the step of mixing the fibers with the dispersion of carbon nanotubes and/or carbon nanohoms.

9. The method according to claim 8, wherein the fixing agent has a polarity opposite to that of the surfactant.

10. The method according to claim 9, wherein the surfactant is anionic, and the fixing agent is cationic.

11. The method according to claim 10, wherein the fixing agent is an organic polymer.

12. A sheet-like article obtained by the method according to any one of claims 6 to 11.
